Europäisches Patentamt

European Patent Office

Office européen des brevets

(11) Publication number: **0 335 558**
A2

## (12) EUROPEAN PATENT APPLICATION

(21) Application number: 89302765.6

(22) Date of filing: 21.03.89

(51) Int. Cl.⁴: **G01S 13/87**

(30) Priority: 26.03.88 GB 8807286

(43) Date of publication of application:
04.10.89 Bulletin 89/40

(84) Designated Contracting States:
AT BE CH DE ES FR GR IT LI LU NL SE

(71) Applicant: THE MARCONI COMPANY LIMITED
The Grove Warren Lane
Stanmore Middlesex HA7 4LY(GB)

(72) Inventor: McCaughan, Daniel Vincent
4 Hall Gardens
Canwick Lincoln LN4 2RG(GB)
Inventor: Sosin, Boleslaw Marian
Frampton Main Road
Boreham Chelmsford Essex CM3 3JF(GB)

(74) Representative: Tolfree, Roger Keith et al
The General Electric Co. p.l.c. Patent
Department GEC-Marconi Research Centre
West Hanningfield Road
Great Baddow, Chelmsford Essex CM2
8HN(GB)

(54) Radio communication system.

(57) A cellular or similar radio system measures the propagation time for signals to be transmitted between a mobile unit and at least two base stations, thereby obtaining two range measurements. This is used in a triangulation process to estimate the position of the mobile unit.

$\succ\!\!\stackrel{|}{\models}$ — BASE STATION COVERING THREE CELLS
$\times$ — VEHICLE
------ — NORMAL COMMUNICATION PATH
------- — POSSIBLE LINKS

## Radio Communication System

This invention relates to a radio communication system of the type having a number of stations at known locations, hereinafter called "base stations", a movable station, and a facility for observing transmissions between the movable station and the base stations and for selecting, depending on the results of this observation, the best base station for the movable station to use for communication purposes.

The "observation" can take place just at the initiation of a communication, or may occur at regular intervals or even continuously during a communication. In the latter case a facility is provided for "handover" from one base station to other during the communication with the minimum interruption to it.

The invention arose from a realisation that communication systems of the aforementioned type could, in a manner similar to a secondary radar system, be adapted to provide a measurement of the range of the movable stations from each of at least two base stations, and thence by a process of triangulation, to provide an indication of the location of the movable station.

The invention provides a radio communication system of the aforesaid type characterised by means for making measurements of the times for transmission of signals between the movable station and at least two base stations and means for deriving, from the measurements, an estimate of the location of the movable station.

The range measurements can be made to varying degrees of accuracy depending on the design of the equipment used. If the accuracy obtained is inadequate it can be improved by storing, e.g. at a base station, data representing a road map, and adjusting the estimate of location using an assumption that the movable station is located on a road.

One way in which the invention may be performed will now be described with reference to the accompanying schematic drawing of a cellular radio system constructed in accordance with the invention.

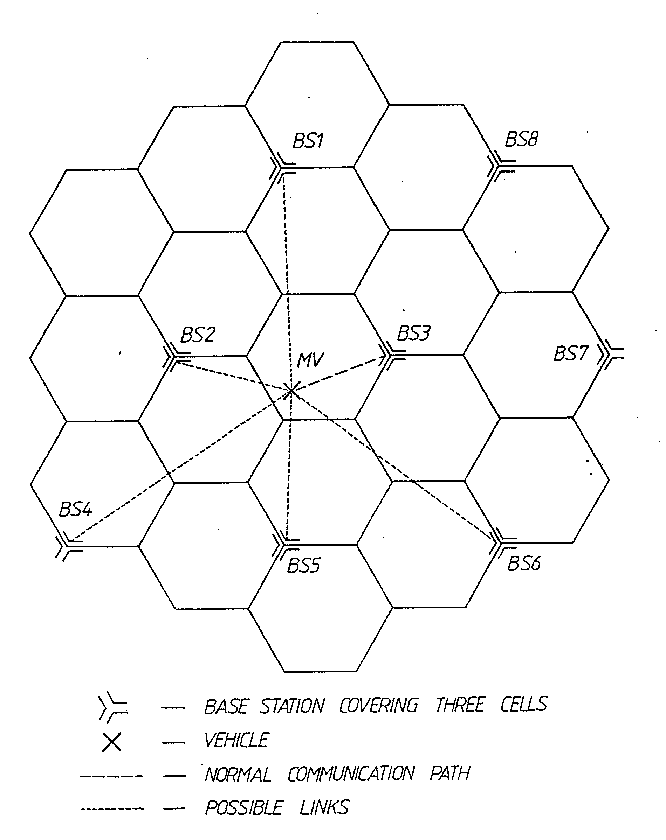

Referring to the drawing there is shown an area of terrain comprising a number of base-stations BS1 to BS8 each serving three "cells" indicated by the hexagonal areas. The base-stations are linked to each other by land lines (not shown) and to the public telephone network.

Initiation of the request for vehicle location information may be given from the vehicle itself or for example by a fixed fleet operator's unit linked to a base-station by a dedicated land line.

A vehicle-mounted mobile unit MU continuously monitors transmissions from all base-stations in its vicinity (which all operate on different frequencies) and selects the base-station (say BS3) from which the strongest signal is received. In alternative arrangements it could make the selection on some assessment of the quality of the signal other than its strength. The mobile unit then automatically selects the frequency appropriate to the selected base-station. It is then able to communicate with that base-station and thence to other mobile units or to anyone else connected to the public telephone network.

On receipt of a request for vehicle location, the base-station BS3 currently serving the mobile unit selects the adjacent base-stations BS 1,2,4,5 and 6. These then all send acknowledgement-request signals to the mobile unit and the mobile responds to each of these by transmitting an "acknowledgment" signal. The time delay between transmission of each acknowledgement request signal and receipt of the acknowledgement signal is measured at each appropriate base-station and these measurements are collected at BS3 where they are (a) adjusted by subtracting a time value equivalent to the response time of the mobile unit (b) converted into range values and (c) used in a triangulation calculation to produce an estimate of the location of the mobile unit. Each base-station has a digitised road map of the areas surrounding it and the co ordinates of point on a road nearest to the estimated location of the mobile unit are then assumed to be the actual co-ordinates of the vehicle. These may then be transmitted to the vehicle or used for other purposes. The location of the vehicle and the road map of the area around it may usefully be displayed visually either in the vehicle, at the base-station or elsewhere via suitable communications links such as the public telephone network.

This system may also be of value in identifying the position of vehicles making malicious calls, or indeed stolen vehicles.

It should be noted that the illustrated system is designed to make six range measurements. This is not essential. Two measurements would be sufficient to give a useful indication of position, but would result in an ambiguity even on flat ground. Three measurements would be sufficient to give a non-ambiguous position on flat ground. Four would in theory be sufficient to give a non-ambiguous position on contoured ground.

## Claims

1. A radio communication system comprising a plurality of stations at known locations, hereinafter called "base stations", a movable station, and a facility for observing transmissions between the movable station and the base stations and for selecting, depending on the results of this observation, the best base station for the movable station to use for communication purposes; characterised by means for making measurements of the times for transmission of signals between the movable station and at least two base stations and means for deriving, from the measurements, an estimate of the location of the movable station.

2. A system according to claim 1 comprising means for storing data representing a road map and means for correcting the said estimate by making an assumption that the movable station is located on a road.

3. A system according to claim 1 or 2 in which each measurement is of the round-trip time for a first signal to be sent in one direction from one station to another and for a second signal to be sent, in response to receipt of the first, in the reverse direction.

4. A system according to claim 3 comprising means for correcting each measurement to take into consideration a finite response time of the station receiving the first signal.

5. A system according to claim 1 and substantially as described with reference to the accompanying drawings and substantially as illustrated therein.

6. A movable station for use in a system according to any preceding claim.

7. A base station for use in a system according to any preceding claim.

BS1

BS8

BS2

MV

BS3

BS7

BS4

BS5

BS6

BASE STATION COVERING THREE CELLS

VEHICLE

NORMAL COMMUNICATION PATH

POSSIBLE LINKS